# EUROPÄISCHE PATENTSCHRIFT

(11) **EP 0 338 119 B1**
(45) Veröffentlichungstag und Bekanntmachung des Hinweises auf die Patenterteilung: **15.06.1994**
(21) Anmeldenummer: 88116647.4
(22) Anmeldetag: 07.10.1988
(51) Int. Cl.: G06F 12/08

(54) **Verfahren zur Kennzeichnung ungültiger Einträge in einem Speicher, insbesondere in einem Cache-Speicher, und Anordnung zur Durchführung des Verfahrens**
Method for identifying invalid entries in a memory, especially in a cache memory, and arrangement for carrying out the method
Procédé d'identification de rubriques invalides dans une mémoire, particulièrement dans une antrémémoire et dispositif de mise en oeuvre du procédé

(30) Priorität: 18.04.1988 DE 3812858
(43) Veröffentlichungstag der Anmeldung: 25.10.1989
(73) Patentinhaber: Siemens Nixdorf Informationssysteme Aktiengesellschaft, 33102 Paderborn (DE)
(72) Erfinder: Hankeln, Martin, Dipl.-Ing., D-8000 München 83 (DE); Kock, Ernst-Josef, Dr. rer. nat. Dipl.-Phys., D-8011 Kirchseeon (DE)
(74) Vertreter: Fuchs, Franz-Josef, Dr.-Ing.

(56) Entgegenhaltungen:
- EP-A- 0 257 405
- EP-A- 0 279 421
- US-A- 4 075 686
- ELECTRONICS & WIRELESS WORLD, Band 93, nr. 1621, November 1987, Seiten 1121-1123, Sutton, Surrey, GB; D. JONES et al.: "The 68030. New architecture, higher integration and improved chip layout result in a 32bit processor that runs twice as fast as the 68020 in some systems"

## Beschreibung

Die Erfindung betrifft ein Verfahren zur Kennzeichnung ungültiger Einträge in einem Speicher, insbesondere in einem Cache-Speicher, gemäß dem Oberbegriff des Patentanspruchs 1 und eine Anordnung zur Durchführung des Verfahrens.

Vielfach weisen die Einträge in einem Speicher neben den Speicherdaten zusätzliche Identifizierkennzeichen zur Ermittlung der Speicherdaten auf, die jeweils gelesen und an die anfordernde Einheit übertragen werden sollen. Beispielsweise wird in einem teilassoziativen Speicher ein vorgegebenes Schlüsselwort mit den Identifizierkennzeichen in Form von Schloßworten verglichen und bei Übereinstimmung werden die mit dem entsprechenden Schloßwort assoziierten Speicherdaten ausgelesen - man siehe z.B. "Elektronische Rechenanlagen", 26. Jahrgang, Heft 4, Seite 168, Bild 1a.

In einem zwischen Verarbeitungseinheit und Hauptspeicher geschalteten Cache-Speicher besteht das für jeden einzelnen Eintrag neben dem eigentlichen Datum vorhandene Identifizierkennzeichen aus einer Teiladresse, wobei diese Teiladresse mit dem das Identifizierkennzeichen bildenden Teil der jeweiligen Zugriffsadresse der Verarbeitungseinheit verglichen wird. Sind die beiden Adressenteile identisch, so erzeugt eine HIT-MISS-Steuerung ein Treffersignal und das Datum wird unter der Voraussetzung, daß es gültig ist, zur anfordernden Verarbeitungseinheit übertragen.

Für die Kennzeichnung eines Dateneintrags in einem Speicher als gültig bzw. ungültig wird für jeden einzelnen Eintrag ein Gültigkeitsbit vorgesehen.

Nachteilig an dem Gültigkeitsbit je Eintrag ist, daß dessen jeweilige Speicherung und Einbeziehung in die Sicherungsüberwachung bei einer Vielzahl von Einträgen einen zusätzlichen Aufwand bedingen. Weil die Vielzahl von Gültigkeitsbits in der einen Treffer/Fehlzugriff anzeigenden Einheit berücksichtigt wird, können auch Probleme entstehen, falls bei einem Cache-Speicher die das Gültigkeitsbit ebenfalls berücksichtigende HIT-MISS-Steuerung in einem gesonderten pinlimitierten Baustein realisiert werden soll.

Der vorliegenden Erfindung liegt daher die Aufgabe zugrunde, ein Verfahren zu schaffen, das zur Ungültigkennzeichnung von Einträgen in einem Speicher die Verwendung eines gesonderten Gültigkeitsbits je Eintrag vermeidet.

Diese Aufgabe wird durch die kennzeichnenden Merkmale des Patentanspruchs 1 gelöst.

Demnach verwendet das erfindungsgemäße Verfahren zur Kennzeichnung eines ungültigen Eintrags das jeweils zugehörige Feld für das Identifizierkennzeichen, in das ein nicht zulässiges Identifizierkennzeichen eingetragen wird. Bei jedem Lesezugriff auf einen Eintrag wird überwacht, ob als zugehöriges Identifizierkennzeichen ein den Eintrag als ungültig kennzeichnendes nicht zulässiges Identifizierkennzeichen vorliegt.

Eine Weiterbildung des erfindungsgemäßen Verfahrens betrifft ein Verfahren für Cache-Speicher in einer Datenverarbeitungsanlage, bei der auf den Hauptspeicher auch direkt unter Umgehung des Cache-Speichers zugegriffen werden kann, und der Direktzugriff auf Daten eines zusammenhängenden Adressbereichs beschränkt ist. Die Identifizierkennzeichen für die Einträge bestehen dabei aus Adressenteilen der Zugriffsadresse für den Hauptspeicher. Zur Kennzeichnung eines Eintrags im Cache-Speicher als ungültig verwendet das weiterführende Verfahren eine den Direktzugriff zum Hauptspeicher ermöglichende Bereichsadresse als nicht zulässige Adresse.

Eine Anordnung zur Durchführung des erfindungsgemäßen Verfahrens gemäß Anspruch 3 weist einen Multiplexer auf, der im Ansteuerpfad für die das Identifizierkennzeichen aufnehmenden Eintragsfelder im Speicher vorgesehen ist. Das jeweilige Identifizierkennzeichen und das nicht zulässige Identifizierkennzeichen bilden die beiden Eingangssignale für den Multiplexer. An die Datenausgänge für das Identifizierkennzeichen ist jeweils ein zusätzlicher Vergleicher angeschlossen, der mit dem nicht zulässigen Identifizierkennzeichen beaufschlagt ist und bei Gleichheit den ausgewählten Eintrag als ungültig kennzeichnet.

Bei Anwendung auf Cache-Speicher ist dem Multiplexer ein Eingangsadressregister zur Aufnahme der jeweiligen Zugriffsadresse vorgeschaltet. Dabei werden dessen Ausgänge für den das jeweilige Identifizierkennzeichen bildenden Adressenteil an den einen Dateneingang des Multiplexers angeschlossen, während die nicht zulässige Adresse am zweiten Dateneingang anliegt. Der Multiplexer ist durch ein Steuersignal umsteuerbar, das die Ungültigkennzeichnung eines Eintrags veranlaßt.

Am zweiten Dateneingang des Multiplexers kann als nicht zulässige Adresse entweder ein vorgegebenes Bitmuster dauernd anliegen oder es sind die Ausgänge für den das nicht zulässige Identifizierkennzeichen bildenden Adressenteil einer Zugriffsadresse angeschlossen, die bei Direktzugriff zum Hauptspeicher in einem zweiten Eingangsadressregister gespeichert ist.

Bei der Anordnung mit beiden Eingangsadressregistern ist gemäß einer weiteren Ausgestaltung der Erfindung der Multiplexer Bestandteil des Ausgangsmultiplexers des Cache-Speichers, wobei der Ausgangsmultiplexer die Funktion hat, die Zugriffsadresse aus einem der beiden Eingangsadressregister zum Hauptspeicher weiterzuleiten. Der Ausgang des Multiplexerteils, der dem das Identifizierkennzeichen bildenden Adressenteil zugeordnet ist, wird mit dem Eingang für die Eintragsfelder des Cache-Speichers, die das Identifizierkennzeichen enthalten, verbunden. Das als Umsteuersignal für den Multiplexerteil wirkende Ausgangssignal eines ODER-Glieds hängt vom Signal für die Weiterleitung der Zugriffsadresse aus einem der beiden Eingangsadressregister und dem Steuersignal, das die Ungültigkennzeichnung eines Eintrags veranlaßt, ab.

Eine andere Lösungsvariante für einen Cache-Speicher mit einem gemeinsamen Eingangsadressregister, in das die jeweilige Zugriffsadresse über einen vorgeschalteten Eingangsmultiplexer auf zwei verschiedenen Wegen, von denen der eine den normalen Zugriffen und der andere den Direktzugriffen vorbehalten ist, eingetragen wird, verwendet den Multiplexer für die Identifizierkennzeichen als Bestandteil des Eingangsmultiplexers. Dem Steuereingang dieses Multiplexerteils ist ein ODER-Glied vorgeschaltet, auf das neben dem Signal für die Übernahme der Direktzugriffsadresse in das Eingangsadressregister auch das die Ungültigkennzeichnung eines Eintrags im Cache-Speicher veranlassende Steuersignal einwirkt. Dadurch kann der das Identifizierkennzeichen aufnehmende Teil des Eingangsadressregisters mit dem im Direktzugriffsweg dauernd anliegenden nicht zulässigen Identifizierkennzeichen geladen werden, um einen Eintrag für ungültig zu erklären.

Dabei kann im Normalzugriffsweg des Eingangsmultiplexers ein Pufferregister für die Zwischenspeicherung der Zugriffsadresse vorgesehen sein, damit bei Übernahme des nicht zulässigen Identifizierkennzeichens der übrige Adressenteil der ursprünglichen Zugriffsadresse für die Auswahl des jeweiligen Eintrags im Cache-Speicher weiterhin zur Verfügung steht, oder aber der das Identifizierkennzeichen aufnehmende Teil des Eingangsadressregisters ist unabhängig von dessen übrigen Teilen ladbar.

Einzelheiten der Erfindung werden nachfolgend anhand von in der Zeichnung dargestellten Ausführungsbeispielen näher erläutert. Im einzelnen zeigen
- FIG 1: das Blockschaltbild einer erfindungsgemäßen Anordnung zur Kennzeichnung eines Eintrags in einem Cache-Speicher als ungültig,
- FIG 2: das Blockschaltbild eines weiteren Ausführungsbeispiels mit Ausnutzung des Ausgangsmultiplexers eines Cache-Speichers und
- FIG 3: das Blockschaltbild eines weiteren Ausführungsbeispiels mit Ausnutzung des Eingangsmultiplexers eines Cache-Speichers.

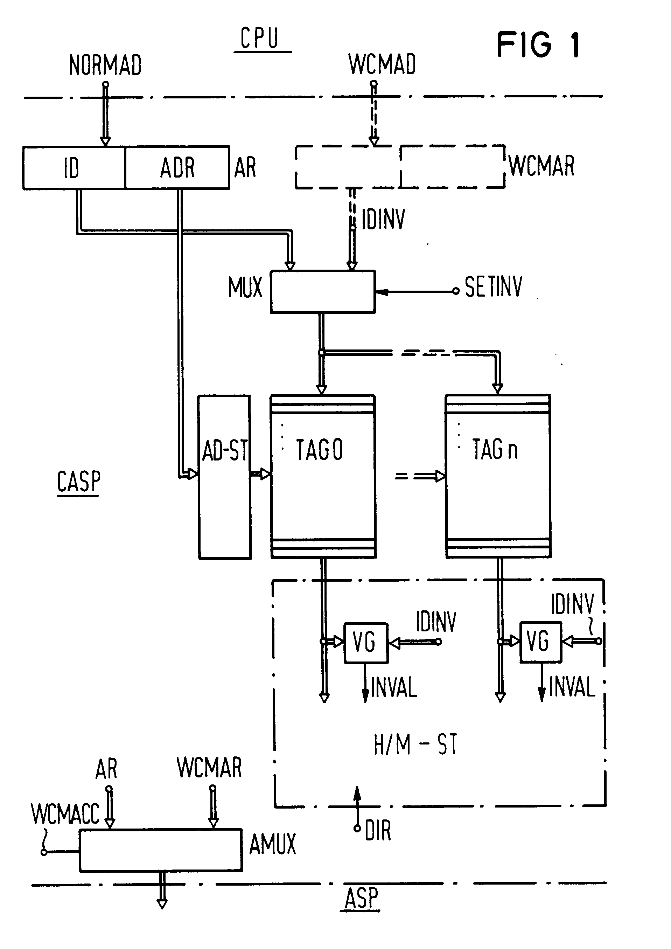

FIG 1 zeigt eine Anordnung für die Ungültigkennzeichnung eines Eintrags in einem Cache-Speicher CASP, der zwischen die Verarbeitungseinheit der Zentraleinheit CPU und dem Hauptspeicher ASP geschaltet ist. Der Cache-Speicher CASP ist aus mehreren Bänken mit den jeweils zugehörigen Eintragsfeldern TAGO bis aufgebaut. Diese werden durch die Teiladresse ADR der in einem Eingangsadressregister AR gespeicherten Zugriffsadresse NORMAD über eine Adressensteuereinrichtung AD-ST adressiert. Der andere Teil der Zugriffsadresse bildet das zugehörige Identifizierkennzeichen ID, das bei jedem Eintrag zusätzlich zum eigentlichen Datum im Feld für das Identifizierkennzeichen gespeichert wird. Ist nun ein Eintrag für ungültig zu erklären, so wird in das zugehörige Feld für das Identifizierkennzeichen ein nicht zulässiges Identifizierkennzeichen eingetragen. Die Anordnung weist daher im Ansteuerpfad für die Eintragsfelder einen Multiplexer MUX auf, an dessen einen Dateneingang die Ausgänge für das jeweils zur Zugriffsadresse NORMAD gehörige Identifizierkennzeichen ID angeschlossen sind und an dessem zweiten Dateneingang das nicht zulässige Identifizierkennzeichen IDINV anliegt. Dieses nicht zulässige Identifizierkennzeichen IDINV besteht entweder aus einem dauernd anliegenden vorgegebenen Bitmuster oder wird von einem Teil der einen Direktzugriff vom Hauptspeicher kennzeichnenden und in einem zweiten Eingangsadressregister WCMAR gespeicherten Bereichsadresse WCMAD gebildet.

Die Auswahl des nicht zulässigen Identifizierkennzeichens IDINV hängt von einem die Ungültigkennzeichnung veranlassenden Steuersignal SETINV ab, durch das der Multiplexer MUX umsteuerbar ist.

Weiterhin weist die Anordnung an den Datenausgängen für das Identifizierkennzeichen jeweils einen Vergleicher VG auf, der bei einem Lesevorgang das zugehörige Identifizierkennzeichen ID mit dem nicht zulässigen Identifizierkennzeichen IDINV vergleicht und bei Übereinstimmung durch Erzeugung des Signals INVAL in der HIT-MISS-Steuerung H/M-ST den Eintrag als ungültig kennzeichnet. Außerdem wird immer dann, wenn ein Direktzugriff auf den Hauptspeicher erfolgt, die Steuerung H/M-ST durch das Signal DIR außer Betrieb gesetzt.

An der Schnittstelle vom Cache-Speicher CASP zum Hauptspeicher ASP ist in herkömmlicher Weise ein Ausgangsmultiplexer AMUX vorgesehen, an dessen einem Dateneingang die Zugriffsadresse aus dem Eingangsadressregister AR und an dessen zweitem Dateneingang die Direktzugriffsadresse aus dem Eingangsadressregister WCMAR anliegt. Umsteuerbar ist der Ausgangsmultiplexer AMUX durch das Signal WCMACC, das auswählt, welche der beiden Zugriffsadressen - NORMAD oder WCMAD - an den Hauptspeicher ASP weitergeleitet werden.

Die Signale DIR und WCMACC sind jeweils aus dem Operationscode eines Mikrobefehls ableitbar, der Daten des nur Direktzugriffen vorbehaltenen Adressbereichs benutzt.

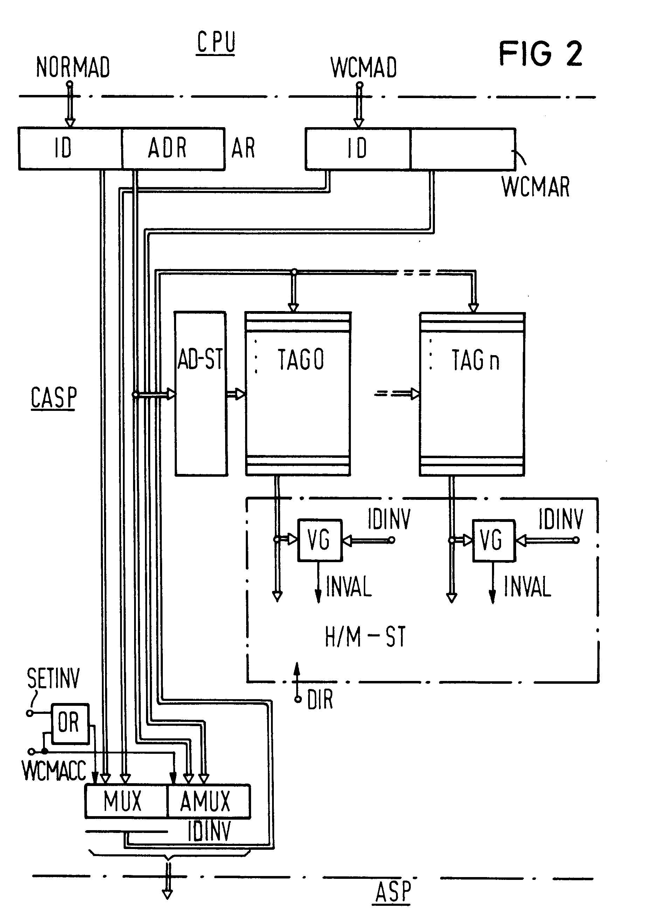

In der Anordnung gemäß FIG 2 sind ebenfall die beiden Eingangsadressregister verwendet, von denen das Eingangsadressregister AR mit der einen Normalzugriff kennzeichnenden Zugriffsadresse NORMAD und das Eingangsadressregister WCMAR mit der einen Direktzugriff kennzeichnenden Zugriffsadresse WCMAD beschreibbar ist. Der Multiplexer MUX für die Identifizierkennzeichen ID ist Bestandteil des an der Schnittstelle zum Hauptspeicher ASP angeordneten Ausgangsmultiplexers AMUX, wobei jeweils die Ausgänge für die das Identifizierkennzeichen ID bildenden Adressteile der Zugriffsadressen NORMAD und WCMAD an die beiden Dateneingänge des Multiplexers MUX angeschlossen sind und dessen Ausgang mit dem Eingang für die das Identifizierkennzeichen aufnehmenden Eintragsfelder des Cache-Speichers verbunden ist. Daher ist dem Umsteuereingang dieses Multiplexerteils ein ODER-Gatter OR vorgeschaltet, auf das die Eingangssignale WCMACC und SETINV einwirken. Das Umsteuersignal WCMACC dient zur Weiterleitung der Zugriffsadresse aus einem der beiden Eingangsadressregister AR oder WCMAR an den Hauptspeicher. Das Signal SETINV veranlaßt, daß der das Identifizierkennzeichen ID bildende Teil der Zugriffsadresse WCMAD als nicht zulässiges Identifizierkennzeichen in das zum entsprechenden Eintrag gehörige Feld eingetragen wird.

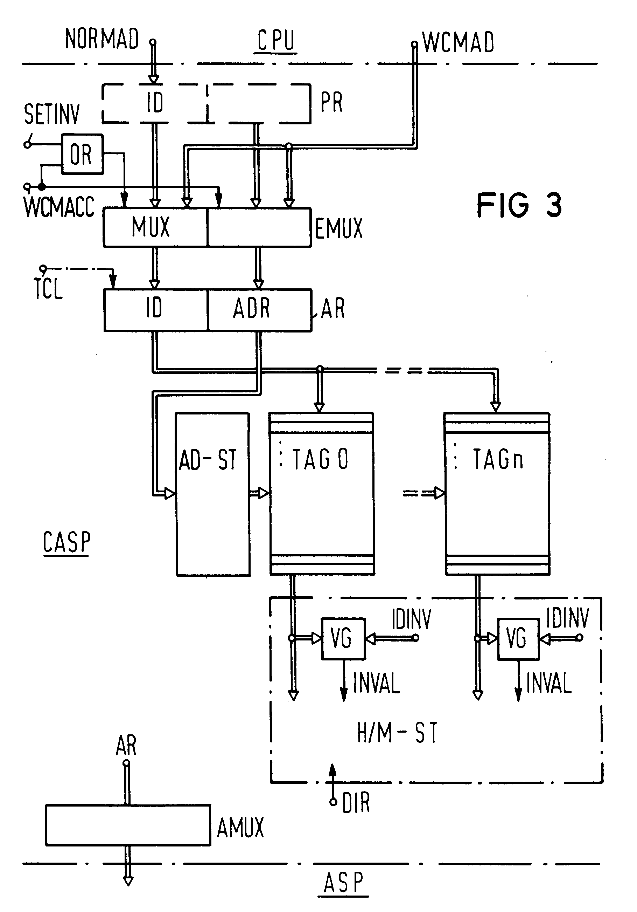

Im Vergleich zu den beiden bisher beschriebenen Ausführungsbeispielen in FIG 1 und FIG 2 ist in FIG 3 der Multiplexer MUX für die Identifizierkennzeichen ID dem Eingangsadressregister AR vorgeschaltet und Bestandteil des Eingangsmultiplexers EMUX. Das Eingangsadressregister AR kann über den Normalzugriffspfad mit der Zugriffsadresse NORMAD oder über den Direktzugriffspfad zum Hauptspeicher mit der Zugriffsadresse WCMAD geladen werden. Analog zu FIG 2 ist im Umsteuereingang des Multiplexers MUX das ODER-Gatter OR mit seinen beiden Eingangssignalen WCMACC und SETINV vorgeschaltet. Während das Umsteuersignal WCMACC für die Übernahme der Direktzugriffsadresse WCMAD in das Eingangsadressregister AR sorgt, veranlaßt das Signal SETINV die Ungültigkennzeichnung eines Eintrags im Cache-Speicher, wodurch der das Identifizierkennzeichen ID aufnehmende Teil des Eingangsadressregisters AR mit dem im Direktzugriffspfad dauernd anliegenden nicht zulässigen Identifizierkennzeichen geladen wird.

Bei einem einheitlichen Ladeimpuls für das gesamte Eingangsadressregister AR muß bei Übernahme des nicht zulässigen Identifizierkennzeichens gewährleistet sein, daß der übrige Adressenteil ADR für die Auswahl des jeweils für ungültig zu erklärenden Eintrags weiterhin zur Verfügung steht. Daher ist im Normalzugriffspfad vor dem Eingangsmultiplexer EMUX ein Pufferregister PR für die Zwischenspeicherung der Normalzugriffsadresse NORMAD vorgesehen. Es besteht auch die Möglichkeit, den das Identifizierkennzeichen ID aufnehmenden Teil des Eingangsadressregisters AR unabhängig vom übrigen Adressenteil ADR durch einen Impuls TCL zu laden.

## Patentansprüche

1. Verfahren zur Kennzeichnung ungültiger Einträge in einem Speicher, dessen Einträge jeweils neben dem eigentlichen Datum wenigstens ein zusätzliches Identifizierkennzeichen aufweisen, insbesondere für Cache-Speicher in einer Datenverarbeitungsanlage, **dadurch gekennzeichnet,** daß anstelle des üblichen Gültigkeitsbits je Eintrag das Feld für das Identifizierkennzeichen zur Kennzeichnung ungültiger Einträge verwendet wird, daß zur Kennzeichnung ungültiger Einträge ein nicht zulässiges Identifizierkennzeichen eingetragen wird und daß bei jedem Lesen eines Eintrags das zugehörige Identifizierkennzeichen auf das Vorliegen des einen ungültigen Eintrag kennzeichnenden nicht zulässigen Identifizierkennzeichens überwacht wird.

2. Verfahren nach Anspruch 1 für Cache-Speicher in einer Datenverarbeitungsanlage, bei der der Hauptspeicher auch im direkten Zugriff unter Umgehung des Cache-Speichers ansteuerbar ist und dieser direkte Zugriff auf Daten eines zusammenhängenden Adressbereichs beschränkt ist, wobei die Identifizierkennzeichen für die einzelnen Dateneinträge im Cache-Speicher aus Adressenteilen der Zugriffsadresse für den Hauptspeicher bestehen, **dadurch gekennzeichnet,** daß als nicht zulässige Adresse für das Identifizierkennzeichen zur Kennzeichnung eines Eintrags im Cache-Speicher als ungültig eine den Direktzugriff zum Hauptspeicher ermöglichende Bereichsadresse verwendet wird.

3. Anordnung zur Durchführung des Verfahrens nach Anspruch 1 oder 2, **dadurch gekennzeichnet,** daß im Ansteuerpfad für die das Identifizierkennzeichen aufnehmenden Eintragsfelder des Speichers (CASP) ein Multiplexer (MUX) mit zwei Dateneingängen vorgesehen ist, an dessen einen Dateneingang das jeweilige Identifizierkennzeichen (ID) und an dessen anderen Dateneingang das nicht zulässige Identifizierkennzeichen (IDINV) zur Kennzeichnung eines Eintrags als ungültig zur Verfügung steht, und daß an die Datenausgänge für das Identifizierkennzeichen des Speichers jeweils ein Vergleicher (VG) angeschlossen ist, der mit dem nicht zulässigen Identifizierkennzeichen (IDINV) als Vergleichsgröße beaufschlagbar ist und bei Gleichheit den ausgewählten Eintrag im Rahmen einer wirksamen Überprüfung als ungültig kennzeichnet.

4. Anordnung nach Anspruch 3 für Cache-Speicher, **dadurch gekennzeichnet,** daß dem Multiplexer (MUX) ein Eingangsadressregister (ADR) zur Aufnahme der jeweiligen Zugriffsadresse (NORMAD) vorgeschaltet ist, dessen Ausgänge für den das jeweilige Identifizierkennzeichen (ID) bildenden Adressenteil an den einen Dateneingang des Multiplexers angeschlossen sind, während die nicht zulässige Adresse (IDINV) für die Ungültigkennzeichnung eines Eintrags am zweiten Dateneingang des Multiplexers anliegt, und daß der Multiplexer durch ein die Ungültigkennzeichnung eines Eintrags veranlassendes Steuersignal (SETINV) umsteuerbar ist.

5. Anordnung nach Anspruch 4, **dadurch gekennzeichnet,** daß die nicht zulässige Adresse (IDINV) für die Ungültigkennzeichnung eines Eintrags aus einem vorgegebenen Bitmuster besteht, das am zweiten Dateneingang des Multiplexers (MUX) dauernd anliegt.

6. Anordnung nach Anspruch 4, **dadurch gekennzeichnet,** daß ein zweites Eingangsadressregister (WCMAR) zur Aufnahme der Zugriffsadresse (WCMAD) bei Direktzugriffen zum Hauptspeicher (ASP) vorgesehen ist, dessen Ausgänge für den das unzulässige Identifizierkennzeichen bildenden Adressenteil an den zweiten Dateneingang des Multiplexers (MUX) angeschlossen sind.

7. Anordnung nach Anspruch 6, **dadurch gekennzeichnet,** daß der Multiplexer (MUX) Bestandteil des Ausgangsmultiplexers (AMUX) des Cache-Speichers (CASP) zur Weiterleitung der Zugriffsadresse aus einem der beiden Eingangsadressregister (AR oder WCMAR) zum Haupspeicher (ASP) ist, daß der Ausgang des für den das Identifizierkennzeichen (ID) bildenden Adressenteil zuständigen Multiplexerteils zusätzlich mit dem Eingang für die das Identifizierkennzeichen aufnehmenden Eintragsfelder des Speichers verbunden ist und daß dem Umsteuereingang dieses Multiplexerteils ein ODER-Glied (OR) vorgeschaltet ist, auf das neben dem Umsteuersignal (WCMACC) für die Weiterleitung der Zugriffsadresse aus einem der beiden Eingangsadressregister (AR oder WCMAR) auch das die Ungültigkennzeichnung eines Eintrags im Speicher veranlassende Steuersignal (SETINV) einwirkt.

8. Anordnung nach Anspruch 3 für Cache-Speicher mit einem gemeinsamen Eingangsadressregister zur Aufnahme der jeweiligen Zugriffsadresse über einen vorgeschalteten Eingangsmultiplexer auf zwei verschiedenen Wegen, von denen der eine für den Direktzugriff zum Hauptspeicher vorgesehen ist, **dadurch gekennzeichnet,** daß der Multiplexer (MUX) für die Identifizierkennzeichen (ID) Bestandteil des Eingangsmultiplexers (EMUX) ist, und daß dem Steuereingang dieses Multiplexerteils ein ODER-Glied (OR) vorgeschaltet ist, auf das neben dem Umsteuersignal (WCMACC) für die Übernahme der Direktzugriffsadresse (WCMAD) in das Eingangsadressregister (AR) auch das die Ungültigkennzeichnung eines Eintrags im Speicher veranlassende Steuersignal (SETINV) einwirkt, so daß der das Identifizierkennzeichen aufnehmende Teil des Eingangsadressregisters mit dem im Direktzugriffsweg dauernd anliegenden nicht zulässigen Identifizierkennzeichen ladbar ist.

9. Anordnung nach Anspruch 8, **dadurch gekennzeichnet,** daß dem einen Dateneingang des Eingangsmultiplexers (EMUX) für den Normalzugriff ein Pufferregister (PR) für Zwischenspeicherung der Zugriffsadresse (NORMAD) vorgeschaltet ist, so daß bei einem einheitlichen Ladeimpuls für das gesamte Eingangsadressregister (AR) bei Übernahme des nicht zulässigen Identifizierkennzeichens der übrige Adressenteil (ADR) der ursprünglichen Zugriffsadresse im Eingangsadressregister für die Auswahl des jeweiligen Eintrags im Speicher verfügbar bleibt.

10. Anordnung nach Anspruch 9, **dadurch gekennzeichnet,** daß der das Identifizierkennzeichen (ID) aufnehmende Teil des Eingangsadressregisters (AR) unabhängig von den übrigen Teilen des Eingangsadressregisters ladbar ist.

## Claims

1. Method for identifying invalid entries in a memory, the entries of which have, in addition to the actual data, in each case at least one additional identifier, preferably for cache memories in a data processing system, characterized in that instead of the customary validity bit, for each entry the field for the identifier is used to identify invalid entries, in that an impermissible identifier is entered to identify invalid entries, and in that the associated identifier is monitored for the presence of the impermissible identifier identifying an invalid entry each time an entry is read.

2. Method according to Claim 1 for cache memories in a data processing system, in which the main memory can also be addressed directly with circumvention of the cache memory, and this direct access is restricted to data of a contiguous address area, the identifiers for the individual data entries in the cache memory being composed of address parts of the access address for the main memory, characterized in that an area address that permits the direct access to the main memory is used as the impermissible address for the identifier to identify an entry in the cache memory as invalid.

3. Arrangement for carrying out the method according to Claim 1 or 2, characterized in that a multiplexer (MUX) with two data inputs is provided in the address path for the entry fields of the memory (CASP) receiving the identifier, at one data input of which multiplexer the respective identifier (ID) and at the other data input of which the impermissible identifier (IDINV) for identifying an entry as invalid are available, and in that a comparator (VG) is connected to the data outputs for the identifier of the memory in each case, which comparator can receive the impermissible identifier (IDINV) as a compare variable, and in the case of equivalence identifies the selected entry as invalid in the course of an effective verification.

4. Arrangement according to Claim 3 for cache memories, characterized in that an input address register (ADR) for receiving the respective access address (NORMAD) is connected upstream of the multiplexer (MUX), the outputs of which register are connected to the one data input of the multiplexer for the address part forming the respective identifier (ID), while the impermissible address (IDINV) for the identification of an entry as invalid is present at the second data input of the multiplexer, and in that the multiplexer can be switched over by a control signal (SETINV) that triggers the identification of an entry as invalid.

5. Arrangement according to Claim 4, characterized in that the impermissible address (IDINV) for the identification of an entry as invalid is composed of a predetermined bit pattern which is continuously present at the second data input of the multiplexer (MUX).

6. Arrangement according to Claim 4, characterized in that a second input address register (WCMAR) is provided for receiving the access address (WCMAD) for direct accesses to the main memory (ASP), the outputs of which register are connected to the second data input of the multiplexer (MUX) for the address part forming the impermissible identifier.

7. Arrangement according to Claim 6, characterized in that the multiplexer (MUX) is part of the output multiplexer (AMUX) of the cache memory (CASP) for forwarding the access address from one of the two input address registers (AR or WCMAR) to the main memory (ASP), in that the output of the multiplexer part responsible for the address part forming the identifier (ID) is additionally connected to the input for the entry fields of the memory receiving the identifier, and in that connected upstream of the switchover input of said multiplexer part is an OR gate (OR), on which, in addition to the switchover signal (WCMACC) for the forwarding of the access address from one of the two input address registers (AR or WCMAR), the control signal (SETINV) that triggers the identification of an entry in the memory as invalid also acts.

8. Arrangement according to Claim 3 for cache memories having a common input address register for receiving the respective access address via an upstream input multiplexer on two different paths, one of which is provided for the direct access to the main memory, characterized in that the multiplexer (MUX) for the identifiers (ID) is a part of the input multiplexer (EMUX), and in that connected upstream of the control input of said multiplexer part is an OR gate (OR), on which, in addition to the switchover signal (WCMACC) for transferring the direct access address (WCMAD) into the input address register (AR), the control signal (SETINV) that triggers the identification of an entry in the memory as invalid also acts, so that the part of the input address register that receives the identifier can be loaded with the impermissible identifier continuously present in the direct access path.

9. Arrangement according to Claim 8, characterized in that a buffer register (PR) for temporarily storing the access address (NORMAD) is connected upstream of the one data input of the input multiplexer (EMUX) for the normal access so that given a uniform load pulse for the entire input address register (AR) when transferring the impermissible identifier, the remaining address part (ADR) of the original access address remains available in the input address register for the selection of the respective entry in the memory.

10. Arrangement according to Claim 9, characterized in that the part of the input address register (AR) receiving the identifier (ID) can be loaded independently of the remaining parts of the input address register.

## Revendications

1. Procédé pour caractériser des introductions non valables dans une mémoire, dont les introductions possèdent chacune, en plus de la donnée proprement dite, au moins un signal caractéristique supplémentaire d'identification, notamment pour des antémoires dans une installation de traitement de données, caractérisé par le fait qu'à la place du bit usuel de validité, pour chaque introduction, on utilise la zone prévue pour le signal caractéristique d'identification pour caractériser des introductions non valables, que pour la caractérisation d'introductions non valables, on introduit un signal caractéristique d'identification non autorisé, et que, lors de chaque lecture d'une introduction, on contrôle le signal caractéristique associé d'identification pour déterminer la présence éventuelle du signal caractéristique non autorisé d'identification, qui caractérise une introduction non valable.

2. Procédé suivant la revendication 1 pour des antémémoires dans une installation de traitement de données, dans laquelle la mémoire principale peut être également commandée avec un accès direct, tout en contournant l'antémémoire, et cet accès direct est limité à des données d'une zone d'adresse continue, les signaux caractéristiques d'identification pour les différentes entrées de données dans l'antémémoire étant constitués par des parties de l'adresse d'accès pour la mémoire principale, caractérisé par le fait qu'on utilise une adresse de zone, qui permet l'accès direct à la mémoire principale, en tant qu'adresse non autorisée pour le signal caractéristique d'identification pour caractériser comme non valable une introduction dans l'antémémoire.

3. Dispositif pour la mise en oeuvre du procédé suivant la revendication 1, caractérisé par le fait que dans la voie de commande pour les zones d'introduction de la mémoire (CASP), qui reçoivent le signal caractéristique d'identification, est prévu un multiplexeur (MUX) comportant deux entrées de données, le signal caractéristique respectif d'identification (ID), tandis qu'à l'autre entrée est disponible le signal caractéristique d'identification non autorisé (IDINV) servant à caractériser une introduction comme non valable, et qu'aux sorties de données pour le signal caractéristique d'identification de la mémoire est raccordé respectivement un comparateur (VG), qui peut être chargé par le signal caractéristique d'identification non autorisé (IDINV) en tant que grandeur de référence et qui, en cas d'identité, caractérise l'introduction sélectionnée comme non valable, dans le cas d'un contrôle effectif.

4. Dispositif suivant la revendication 3 pour des antémémoires, caractérisé par le fait qu'en amont du multiplexeur (MUX) est connecté un registre d'adresses d'entrée (ADR) servant à recevoir l'adresse respective d'accès (NORMAD), et dont les sorties sont connectées, pour la partie d'adresse constituant le signal caractéristique respectif d'identification (ID), à une introduction de données du multiplexeur, tandis que l'adresse non autorisée (IDINV) est appliquée, pour caractériser une entrée comme étant non valable, à la seconde entrée de données du multiplexeur, et que la commande du multiplexeur peut être inversée par un signal de commande (SETINV), qui déclenche la caractérisation d'une introduction comme étant non valable.

5. Dispositif pour la mise en oeuvre du procédé suivant la revendication 4, caractérisé par le fait que l'adresse non autorisée (IDINV) pour la caractérisation d'une introduction comme non valable est constituée par un profil binaire prédéterminé, qui est appliqué en permanence à la seconde entrée de données du multiplexeur (MUX).

6. Dispositif suivant la revendication 4, caractérisé par le fait qu'il est prévu un second registre d'adresses d'entrée (WCMAR) servant à recevoir l'adresse d'accès (WCMAD) dans le cas d'accès directs à la mémoire principale (ASP), et dont les sorties sont raccordées, pour la partie de l'adresse constituant le signal caractéristique non autorisé d'identification, à la seconde entrée de données du multiplexeur (MUX).

7. Dispositif suivant la revendication 6, caractérisé par le fait que le multiplexeur MUX fait partie du multiplexeur de sortie (AMUX) de l'antémémoire (CASP) servant à retransmettre l'adresse d'accès depuis l'un des deux registres d'adresses d'entrée (AR ou WCMAR) à la mémoire principale (ASP), que la sortie de la partie du multiplexeur, qui est associée à la partie de l'adresse formant le signal caractéristique d'identification (ID), est connecté en outre à l'entrée prévue pour les zones d'introduction de la mémoire, qui reçoivent le signal caractéristique d'identification, et qu'en amont de l'entrée d'inversion de commande de cette partie du multiplexeur est branché un circuit OU (OR), sur lequel agit, en dehors du signal d'inversion de commande (WCMACC) pour la retransmission de l'adresse d'accès à partir de l'un des deux registres d'entrée (AR ou WCMAR), également le signal de commande (SETINV) qui déclenche la caractérisation d'une introduction comme non valable dans la mémoire.

8. Dispositif suivant la revendication 3 pour des antémémoires comportant un registre commun d'adresses d'entrée servant à recevoir l'adresse respective d'accès par l'intermédiaire d'un multiplexeur d'entrée branché en amont, et ce sur deux trajets différents, dont l'un est prévu pour l'accès direct à la mémoire principale, caractérisé par le fait que le multiplexeur (MUX) prévu pour le signal caractéristique d'identification (ID) fait partie du multiplexeur d'entrée (EMUX), et qu'en amont de l'entrée de commande de cette partie du multiplexeur est branché un circuit OU (OR), sur lequel agit, outre le signal d'inversion de commande (WCMACC) pour le transfert de l'adresse d'accès direct (WCMAD) dans le registre d'adresses d'entrée (AR), également le signal de commande (SETINV) qui déclenche la caractérisation d'une introduction comme non valable dans la mémoire de sorte que la partie, qui reçoit le signal caractéristique d'identification, du registre d'adresses d'entrée peut être chargée avec le signal caractéristique d'identification non autorisé, qui est présent en permanence dans le trajet d'accès direct.

9. Dispositif suivant la revendication 8, caractérisé par le fait qu'en amont d'une entrée de données du multiplexeur d'entrée (EMUX) pour l'accès normal est branché un registre tampon (PR) servant à mémoriser temporairement l'adresse d'accès (NORMAD), de sorte que lors de l'apparition d'une impulsion de charge uniforme pour l'ensemble du registre d'adresses d'entrée (AR), et lors du transfert du signal caractéristique d'identification non autorisé, la partie restante (AD) de l'adresse d'accès initiale reste disponible dans le registre d'adresses d'entrée pour la sélection de l'entrée respective dans la mémoire.

10. Dispositif suivant la revendication 9, caractérisé par le fait que la partie, qui reçoit le signal caractéristique d'identification (ID), du registre d'adresses d'entrée (AR) est indépendante des autres parties du registre d'adresses d'entrée.
